# EUROPEAN PATENT SPECIFICATION

(11) **EP 2 187 402 B1**
(45) Date of publication and mention of the grant of the patent: **11.01.2012**
(21) Application number: 08305799.2
(22) Date of filing: 12.11.2008
(51) Int. Cl.: G21C 3/33

(54) **Lower nozzle for nuclear fuel assembly for pressurized water reactor**
Untere Düse eines Brennstabbündels für einen Druckwasserreaktor
Embout inférieur pour assemblage de combustible nucléaire pour réacteur à eau pressurisée

(43) Date of publication of application: 19.05.2010
(73) Proprietor: Areva NP, 92400 Courbevoie (FR)
(72) Inventor: Rudolph, Mattias, 91085 Weisendor (DE); Friedrich, Erhard, 90542 Eckental (DE); Hintergräber, Christian, 91052 Erlangen (DE); Lange, Uwe, 63110 Rodgau (DE)
(74) Representative: Blot, Philippe Robert Emile

(56) References cited:
- WO-A-95/14996
- FR-A- 2 585 499
- FR-A- 2 848 328
- JP-A- 59 085 993

## Description

The present invention relates to a lower nozzle for nuclear fuel assembly for use in a pressurized water reactor, of the type comprising an upper end and a lower end for the lower nozzle to rest on a lower core plate of a reactor core and a lateral surface extending along a longitudinal axis from the lower end to the upper end.

A nuclear fuel assembly for use in a pressurized water reactor (PWR) conventionally comprises a bundle of fuel rods supported by a structure comprising a lower nozzle (or lower tie plate) and an upper nozzle (or upper tie plate) spaced in a longitudinal direction and connected only by longitudinal tubes, the fuel rods being supported by spacer grids secured to the tubes.

In use, fuel assemblies are arranged in an array in the core of a nuclear reactor. Each fuel assembly is inserted vertically between adjacent assemblies.

The fuel assembly is elongated, typically of approximately 4 to 5 meters high and 20 to 25 centimetres wide, and may bend along its length due to the operating conditions inside the reactor core and/or to the flexibility of its structure.

During insertion of a fuel assembly between adjacent other assemblies, such bending increases the risk that the lower nozzle of the fuel assembly will contact the adjacent fuel assemblies, increasing the friction and thus complicating the insertion and possibly damaging the fuel assemblies.

It may even occur that the lower nozzle of the fuel assembly abuts the lower nozzle of an adjacent fuel assembly thus preventing full insertion of the fuel assembly.

In such case, it is possible to lift up the assembly, rotate the fuel assembly around a longitudinal axis (for example of 90° or 180° for fuel assembly of a square cross-section) and insert the fuel assembly downwardly again. However, such operations are time consuming.

FR 2 848 328 discloses a fake assembly for moving adjacent nuclear fuel assemblies before investing a real nuclear fuel assembly.

An object of the invention is to provide a lower nozzle allowing improving easiness and safety during insertion of a fuel assembly into a reactor core.

To this end, the invention proposes a nuclear fuel assembly lower nozzle of the above mentioned type, wherein the lateral surface comprises a longitudinal segment tapering downwardly progressively and continuously along the longitudinal axis and extending on at least 50% of the height of the lateral surface.

In other embodiments, the lower nozzle comprises one or several of the following features, taken in isolation or in any technically feasible combination:
- the tapered longitudinal segment tapers downwardly continuously and progressively in side view in any transverse direction perpendicular to the longitudinal axis;
- the tapered longitudinal segment tapers symmetrically relative to the longitudinal axis;
- the tapered longitudinal segment is ruled;
- the tapered longitudinal segment is conical;
- the tapered longitudinal segment is of polygonal transverse cross-section, namely of quadratic or hexagonal transverse cross-section;
- the half cone angle of the tapered longitudinal lower segment is comprised between 0.5° and 15°;
- the tapered longitudinal lower segment extends on at least 70% of the height of the lateral surface;
- the lateral surface comprises a cylindrical upper segment extending the tapered longitudinal lower segment upwardly to the upper end; and
- a tubular water inlet extending the lower nozzle along the longitudinal axis downwardly from the lower end, the water inlet having an outer surface of tapering downwardly progressively and continuously.

The invention also relates to a nuclear fuel assembly for use in a pressurized water reactor, comprising a bundle of elongated fuel rods and an structure for supporting the fuel rods, the structure comprising a lower nozzle and an upper nozzle spaced longitudinally, guide tubes connecting between the nozzles and spacer grids secured to and distributed along the length of the guide tubes, the fuel rods being supported by the spacer grids, wherein the lower nozzle is a nuclear fuel assembly lower nozzle according to any one of the preceding claims.

The invention and its advantages will be better understood on reading the following description given solely by way of example and with reference to the appended drawings, in which:
- Figure 1 is a schematic side elevation view of a fuel assembly having a lower nozzle according to the invention;
- Figure 2 is an enlarged view of the lower nozzle of the fuel assembly of Figure 1;
- Figure 3 is a bottom view of the lower nozzle of Figure 2;
- Figure 4 is a view illustrating positioning of the fuel assembly of Figure 1 into a reactor core; and
- Figures 5 and 6 are views similar to that of Figures 2 and 3 of a lower nozzle according to another embodiment.

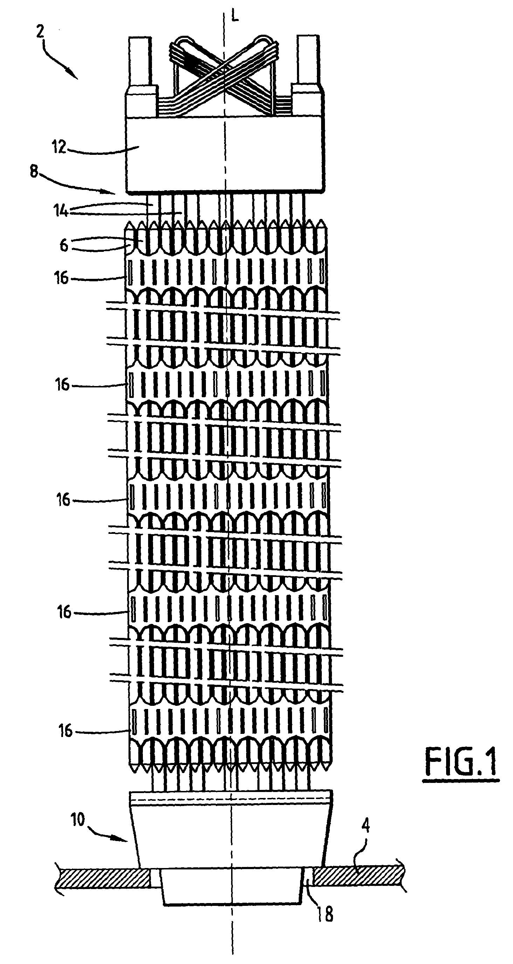

The fuel assembly 2 of Figure 1 is elongated and extends along a longitudinal direction L.

In use, the fuel assembly 2 is intended to be inserted inside a reactor core and to rest on a lower core plate 4 with the longitudinal direction L oriented vertically. In the following, the terms relating to orientation, such as downward, upward..., refer to the longitudinal direction L extending vertically.

The fuel assembly 2 comprises a bundle of fuel rods 6 elongated along the longitudinal direction L and a structure 8 for supporting the fuel rods 6.

The structure 8 comprises a lower nozzle 10 and an upper nozzle 12 spaced longitudinally, guide tubes 14 extending longitudinally between the lower nozzle 10 and the upper nozzle 12 and spacer grids 16 distributed along the guide tubes 14 between the lower nozzle 10 and the upper nozzle 12.

The upper nozzle 12 is adapted for lifting up the fuel assembly 2 using a clamp.

The guide tubes 14 connect the lower nozzle 10 to the upper nozzle 12 and maintain the longitudinal spacing between them. The lower nozzle 10 and the upper nozzle 12 are connected only by the guide tubes 14.

The guide tubes 14 are tubular for allowing insertion of cluster rods which do not contain fissile material (not shown) inside the guide tubes 14 through the upper nozzle 12.

Each spacer grid 16 extends transversally and defines a lattice of cells for receiving the guide tubes 14 and the fuel rods 6. The fuel rods 6 extend through the cells and are supported by the spacer grids 16.

In use, the fuel assembly 2 rests via the lower nozzle 10 on the lower core plate 4 above a coolant fluid inlet opening 18 of the lower core plate 4. The lower nozzle 10 supports the fuel assembly 2 and allows coolant fluid to flow vertically upwardly through the lower nozzle 10.

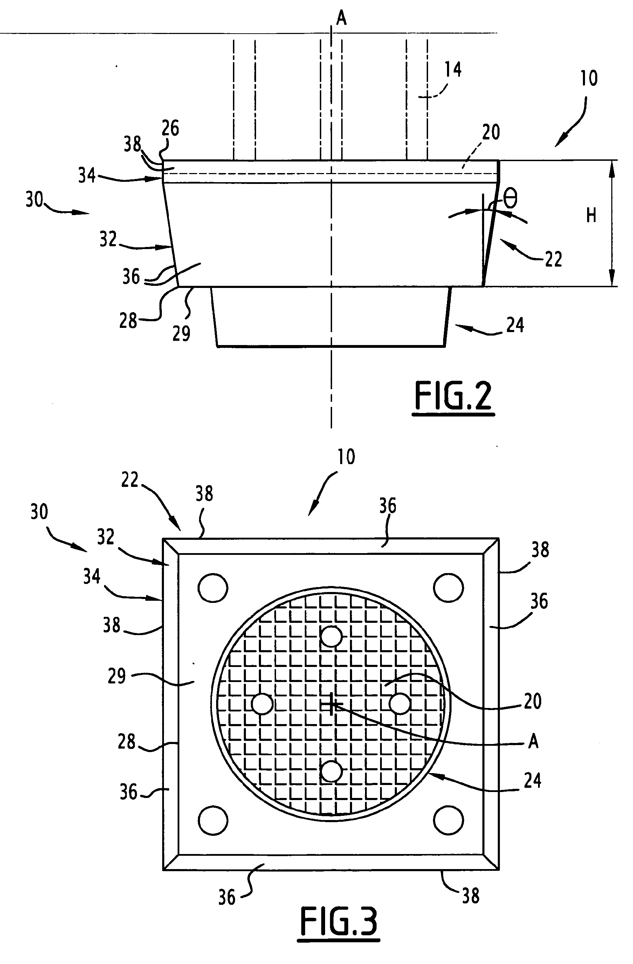

As illustrated in Figures 2 and 3, the lower nozzle 10 comprises an upper plate 20, a tubular base 22 extending downwardly along a longitudinal axis A from the periphery of the upper plate 20 and a tubular inlet 24 extending the base 22.

The base 22 extends longitudinally between an upper end 26 and a lower end 28. The upper end 26 and the lower end 28 have square outlines centred on the longitudinal axis A and the length of the outer edges of the lower end 28 is inferior to that of the upper end 26.

The upper plate 20 extends transversely at the upper end 26 of the base 22 and is adapted for connecting the guide tubes 14 (represented in dotted line on Figure 2) and has openings for allowing coolant fluid flow through the upper plate 20.

The lower end 28 is intended to rest against the lower core plate 4 at the periphery of an opening 18. The base 22 is provided at the lower end 28 with a bearing surface 29 extending transversely to the longitudinal axis A. The bearing surface 29 is symmetric around the longitudinal axis A.

The lower nozzle 10 has a lateral surface 30 extending between the outer periphery of the lower end 28 and the outer periphery of the upper end 26. The lateral surface 30 is axisymmetric around the longitudinal axis A.

The lateral surface 30 comprises a longitudinal lower segment 32 immediately adjacent the lower end 28, and one longitudinal upper segment 34 extending upwardly from the upper extremity of the lower segment 32, up to the upper end 26.

The lower segment 32 is of reversed pyramidal shape and comprises four inclined faces 36 converging downwardly along the longitudinal axis A. Each inclined face 36 is inclined relative to the longitudinal axis A at an angle θ comprised between 0.5 ° and 15°.

The pyramid shaped lower segment 32 is conical and the inclination of each inclined face 36 relative to the longitudinal axis A equals the half-cone angle of the lower segment 32.

The lower segment 32 has transverse dimensions decreasing progressively and continuously downwardly along the longitudinal axis A.

The lower segment 32 tapers downwardly progressively and continuously in side view in any direction perpendicular to the longitudinal axis A, symmetrically relative to the longitudinal axis A.

The lower segment 32 extends on at least 50% the height H of the lateral surface 30 taken along the longitudinal axis A between the lower end 28 and the upper end 26, preferably at least 70%.

The upper segment 34 is cylindrical around the longitudinal axis A. It has a constant square transverse cross-section corresponding to the outline of the upper end 26. The upper segment 34 comprises four flat longitudinal faces 38 parallel to the longitudinal axis A.

The inlet 24 extends downwardly along the longitudinal axis A from the lower end 28 of the base 22. The inlet 24 is conical of circular transverse cross-section and downwardly converging.

The fuel assembly 2 might bend along the longitudinal direction L due to severe operating conditions and its structure 8 in which the lower nozzle 10 and the upper nozzle 12 are connected by the guide tubes 14 only.

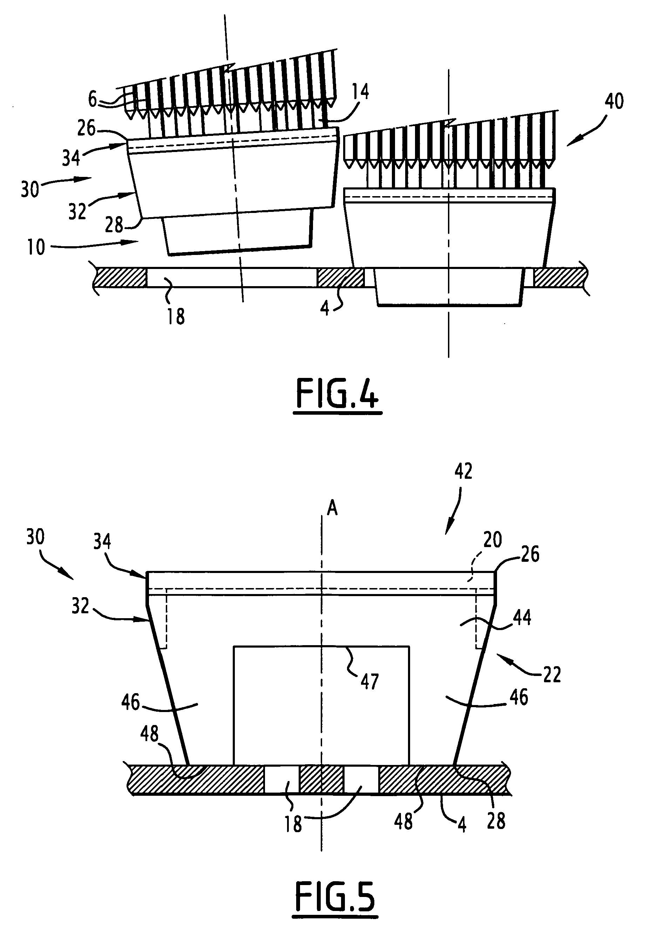

During insertion of the fuel assembly 2 beside an adjacent fuel assembly 40, the fuel assembly 2 is lifted down with controlling the position of the upper nozzle 12. However, as illustrated on Figure 4, the lower nozzle 10 may offset laterally and/or be inclined relative to the vertical direction due to the bending and might abut by its lower end 28 or grate by its lateral surface 30 against the lower nozzle of the adjacent fuel assembly 40.

The lower end 28 having an outline of smaller transverse dimensions than that of the upper end 26 limits the risk that the lower end 28 will abut the lower nozzle of the adjacent fuel assembly 40.

The tapered lower segment 32 limits the risk of grating with the lower nozzle of the adjacent fuel assembly 40. Any contact will be delayed in the stroke of the downward movement of the fuel assembly 2 and progressive thus limiting the risk of damages. Any gratings will occur on a reduced longitudinal stroke.

The continuous and progressive tapering of the lower segment 32 ensures that the lower segment 32 is smooth and has no protruding abutment portion.

The extension of the tapered lower segment 32 on a significant portion of the height H of the lower nozzle 10 allows maintaining sufficient transverse dimensions for the bearing surface 29 of the lower end 28 which has to support the weight of the fuel assembly 2 while allowing significant reduction of abutment risks and grating risks.

In an example, the height H of the lower nozzle 10 taken between the lower end 28 and the upper end 26 is of approximately 105 mm, and the height of the tapered lower segment 32 is of 100 mm.

The conical inlet 24 provide similar advantages with respect to the edge of the opening 18 of the lower core plate 4 into which the inlet 24 is inserted during positioning of the fuel assembly 2 into the reactor core.

The upper segment 34 having faces 38 parallel to the longitudinal axis A allows creating a narrow passage having an important flow resistance between the adjacent lower nozzles which can limit the flow of coolant fluid flowing between the adjacent lower nozzles and bypassing the fuel assemblies.

The proportion of the lower segment relative to the upper segment is chosen to lower abutment and grating risks or consequences while limiting coolant fluid flows bypassing the fuel assemblies.

On Figure 5, the numeral references of Figures 1 - 4 are used for the similar elements.

The lower nozzle 42 of Figure 5 differs from that of Figure 1 - 4 by the feature that the base 22 comprises a tubular skirt 44 extending downwardly from the periphery of the upper plate 20 and four corner feet 46 each extending downwardly from a respective corner of the skirt 44 (only two feet 46 are visible on Figure 5).

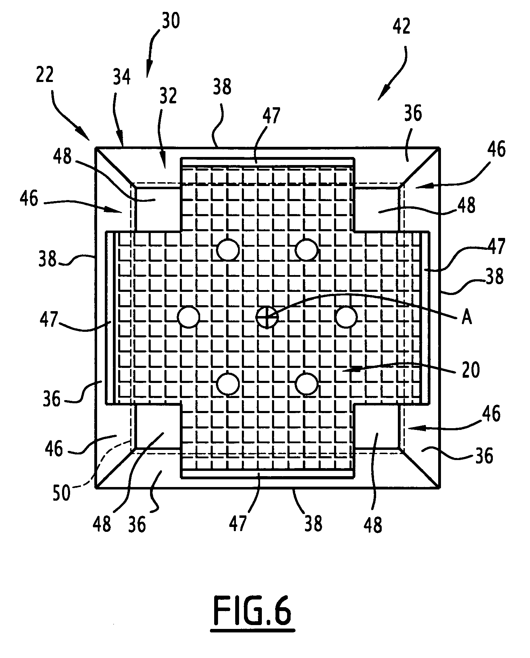

Each pair of feet 46 defines with the lower edge 47 of the skirt 44 a lateral opening. Each foot 46 is provided at its lower end 48 with a lower bearing face for resting onto a lower core plate 4. The lower ends 48 of the feet 46 define the lower end 28 of the base 22. The lower end 28 has a square outline 50 (represented in dash-doted lines on Figure 6).

The lateral surface 30 of the lower nozzle 42 extends on the feet 46 and on the skirt 44. The lateral surface 30 exhibits an overall reverse pyramidal shape and comprises a downwardly tapering lower segment 32 of downwardly decreasing square cross-section having four faces 36 and a cylindrical upper segment 34 of constant square cross-section.

The lower segment 32 extends longitudinally from the lower end 28 up to a level above the lower edge 47 of the skirt 44 and the upper segment 34 extends in the remaining portion of the skirt 44. In an alternative, the lower segment 32 extends to a level below the skirt 44.

The upper face and the lower face of the lower nozzle are not limited to square outlines as illustrated in the embodiments of Figures 1 - 4 and 5.

In an variant for fuel assemblies of hexagonal transverse cross-section, the lower nozzle has an upper face and an lower face of hexagonal outlines and the tapered segment of the lateral surface has a reversed pyramidal shape of hexagonal base with faces inclined relative to the longitudinal axis A.

More generally, the lower nozzle has transverse cross-section of polygonal outline and the tapered segment of the lateral face of the lower nozzle is of reversed pyramidal shape with its faces inclined relative to the longitudinal axis A.

The tapered segment is not limited to conical surfaces such as pyramid shaped surfaces and may be more generally a ruled surface.

In an variant, the lower nozzle has an upper surface of polygonal outline (e.g. hexagonal outline), a lower surface of circular outline and the tapered segment is a ruled surface defined by rectilinear lines passing by a polygonal outline and a circular outline, the rectilinear lines being inclined inwardly and downwardly relative to the longitudinal axis A.

The tapered segment is not limited to ruled surface and may exhibit concavity or convexity in the longitudinal direction.

In a general manner, the tapered segment tapers downwardly continuously and progressively in side view in any transverse direction perpendicular to the longitudinal axis A, preferably symmetrically relative to the longitudinal axis A of the lower nozzle.

## Claims

1. Nuclear fuel assembly lower nozzle (10, 42) for use in a pressurized water reactor (PWR), of the type comprising an upper end (26) and a lower end (28) for the lower nozzle (10, 42) to rest on a lower core plate (4) of a reactor core and a lateral surface (30) extending along a longitudinal axis (A) from the lower end (28) to the upper end (26), **characterized in that** the lateral surface (30) comprises a longitudinal segment (32) tapering downwardly progressively and continuously along the longitudinal axis (A) and extending on at least 50% of the height (H) of the lateral surface (30).

2. Nuclear fuel assembly Lower nozzle according to claim 1, wherein the tapered longitudinal segment (32) tapers downwardly continuously and progressively in side view in any transverse direction perpendicular to the longitudinal axis (A).

3. Nuclear fuel assembly Lower nozzle according to claim 1 or 2, wherein the tapered longitudinal segment (32) tapers symmetrically relative to the longitudinal axis (A).

4. Nuclear fuel assembly Lower nozzle according to any one of the preceding claims, wherein the tapered longitudinal segment (32) is ruled.

5. Nuclear fuel assembly Lower nozzle according to any one of the preceding claims, wherein the tapered longitudinal segment (32) is conical.

6. Nuclear fuel assembly Lower nozzle according to claim 5, wherein the tapered longitudinal segment (32) is of polygonal transverse cross-section, namely of quadratic or hexagonal transverse cross-section.

7. Nuclear fuel assembly Lower nozzle according to claim 5 or 6, wherein the half cone angle of the tapered longitudinal segment (32) is comprised between 0.5°and 15°.

8. Nuclear fuel assembly Lower nozzle according to any one of the preceding claims, wherein the tapered longitudinal segment (32) extends on at least 70% of the height (H) of the lateral surface (30).

9. Nuclear fuel assembly Lower nozzle according to any one of the preceding claims, wherein the lateral surface (30) comprises a cylindrical segment (34) extending the tapered longitudinal segment (32) upwardly to the upper end (26).

10. Nuclear fuel assembly Lower nozzle according to any one of the preceding claims, comprising a tubular water inlet (24) extending the lower nozzle along the longitudinal axis (A) downwardly from the lower end (28), the water inlet (24) having an outer surface of tapering downwardly progressively and continuously.

11. Nuclear fuel assembly (2) for use in a pressurized water reactor (PWR), comprising a bundle of elongated fuel rods (6) and an structure (8) for supporting the fuel rods, the structure comprising a lower nozzle (10, 42) and an upper nozzle (12) spaced longitudinally, guide tubes (14) connecting between the nozzles (10, 12) and spacer grids (16) secured to and distributed along the length of the guide tubes (14), the fuel rods (6) being supported by the spacer grids (16), wherein the lower nozzle (10) is a nuclear fuel assembly lower nozzle according to any one of the preceding claims.

## Patentansprüche

1. Untere Düse (10, 42) für Brennelemente zum Einsatz in einem Druckwasserreaktor (PWR) des Typs, der ein oberes Ende (26) und ein unteres Ende (28) für die untere Düse (10, 42), das auf einer unteren Kernplatte (4) eines Reaktorkerns aufsitzt, sowie eine seitliche Fläche (30) umfasst, die entlang einer Längsachse (A) von dem unteren Ende (28) zu dem oberen Ende (26) verläuft,
**dadurch gekennzeichnet, dass** die seitliche Fläche (30) ein Längssegment (32) umfasst, das sich entlang der Längsachse (A) nach unten zunehmend und kontinuierlich verjüngt und sich an wenigstens 50% der Höhe (H) der seitlichen Fläche (30) entlang erstreckt.

2. Untere Düse für Brennelemente nach Anspruch 1, wobei sich das sich verjüngende Längssegment (32) in Seitenansicht in jeder beliebigen Querrichtung senkrecht zu der Längsachse (A) kontinuierlich und zunehmend nach unten verjüngt.

3. Untere Düse für Brennelemente nach Anspruch 1 oder 2, wobei sich das sich verjüngende Längssegment (32) symmetrisch relativ zu der Längsachse (A) verjüngt.

4. Untere Düse für Brennelemente nach einem der vorangehenden Ansprüche, wobei das sich verjüngende Längssegment (32) geradlinig ist.

5. Untere Düse für Brennelemente nach einem der vorangehenden Ansprüche, wobei das sich verjüngende Längssegment (32) konisch ist.

6. Untere Düse für Brennelemente nach Anspruch 5, wobei das sich verjüngende Längssegment (32) vieleckigen Querschnitt, d.h. quadratischen oder sechseckigen Querschnitt, hat.

7. Untere Düse für Brennelemente nach Anspruch 5 oder 6, wobei der Halbkegelwinkel des sich verjüngenden Längssegmentes (32) zwischen 0,5° und 15° liegt.

8. Untere Düse für Brennelemente nach einem der vorangehenden Ansprüche, wobei sich das sich verjüngende Längssegment (32) an wenigstens 70% der Höhe (H) der seitlichen Fläche (30) entlang erstreckt.

9. Untere Düse für Brennelemente nach einem der vorangehenden Ansprüche, wobei die seitliche Fläche (30) ein zylindrisches Segment (34) umfasst, das das sich verjüngende Längssegment (32) bis zum oberen Ende (26) nach oben verlängert.

10. Untere Düse für Brennelemente nach einem der vorangehenden Ansprüche, das einen röhrenförmigen Wassereinlass (24) umfasst, der die untere Düse entlang der Längsachse (A) vom unteren Ende (28) nach unten verlängert, wobei der Wassereinlasse (24) eine Außenfläche hat, die sich zunehmend und kontinuierlich nach unten verjüngt.

11. Brennelement (2) zum Einsatz in einem Druckwasserreaktor (PWR), das ein Bündel länglicher Brennstäbe (6) und eine Struktur (8) zum Tragen der Brennstäbe umfasst, wobei die Struktur eine untere Düse (10, 42) sowie eine obere Düse (12) umfasst, die in Längsrichtung beabstandet sind, Führungsröhren (14), die die Düsen (10, 12) verbinden, und Abstandshaltegitter (16) umfasst, die an den Führungsröhren (14) befestigt und über ihre Länge verteilt sind, wobei die Brennstäbe (6) von den Abstandshaltegittern (16) getragen werden und die untere Düse (10) eine untere Düse für Brennelemente nach einem der vorangehenden Ansprüche ist.

## Revendications

1. Buse inférieure pour assemblage de combustible nucléaire (10, 42) destinée à être utilisée dans un réacteur à eau pressurisée (PWR), du type comprenant une extrémité supérieure (26) et une extrémité inférieure (28) pour que la buse inférieure (10, 42) repose sur une plaque de coeur inférieure (4) d'un coeur de réacteur et une surface latérale (30) s'étendant le long d'un axe longitudinal (A) de l'extrémité inférieure (28) à l'extrémité supérieure (26), **caractérisée en ce que** la surface latérale (30) comprend un segment longitudinal (32) s'effilant progressivement et continuellement vers le bas le long de l'axe longitudinal (A) et s'étendant sur au moins 50 % de la hauteur (H) de la surface latérale (30).

2. Buse inférieure pour assemblage de combustible nucléaire selon la revendication 1, dans laquelle le segment longitudinal effilé (32) s'effile continuellement et progressivement vers le bas en vue latérale dans n'importe quelle direction transversale perpendiculaire à l'axe longitudinal (A).

3. Buse inférieure pour assemblage de combustible nucléaire selon la revendication 1 ou 2, dans laquelle le segment longitudinal effilé (32) s'effile symétriquement par rapport à l'axe longitudinal (A).

4. Buse inférieure pour assemblage de combustible nucléaire selon l'une quelconque des revendications précédentes, dans laquelle le segment longitudinal effilé (32) est réglé.

5. Buse inférieure pour assemblage de combustible nucléaire selon l'une quelconque des revendications précédentes, dans laquelle le segment longitudinal effilé (32) est conique.

6. Buse inférieure pour assemblage de combustible nucléaire selon la revendication 5, dans laquelle le segment longitudinal effilé (32) est de coupe transversale polygonale, en l'occurrence de coupe transversale quadratique ou hexagonale.

7. Buse inférieure pour assemblage de combustible nucléaire selon la revendication 5 ou 6, dans laquelle l'angle de demi-cône du segment longitudinal effilé (32) est compris entre 0,5° et 15°.

8. Buse inférieure pour assemblage de combustible nucléaire selon l'une quelconque des revendications précédentes, dans laquelle le segment longitudinal effilé (32) s'étend sur au moins 70 % de la hauteur (H) de la surface latérale (30).

9. Buse inférieure pour assemblage de combustible nucléaire selon l'une quelconque des revendications précédentes, dans laquelle la surface latérale (30) comprend un segment cylindrique (34) étendant le segment longitudinal effilé (32) vers le haut jusqu'à l'extrémité supérieure (26).

10. Buse inférieure pour assemblage de combustible nucléaire selon l'une quelconque des revendications précédentes, comprenant une entrée d'eau tubulaire (24) étendant la buse inférieure le long de l'axe longitudinal (A) vers le bas à partir de l'extrémité inférieure (28), l'entrée d'eau (24) ayant une surface extérieure s'effilant progressivement et continuellement vers le bas.

11. Assemblage de combustible nucléaire (2) destiné à être utilisé dans un réacteur à eau pressurisée (PWR), comprenant un faisceau de barres de combustible allongées (6) et une structure (8) pour supporter les barres de combustible, la structure comprenant une buse inférieure (10, 42) et une buse supérieure (12) espacées longitudinalement, des tubes guides (14) se connectant entre les buses (10, 12) et des grilles d'entretoise (16) fixées et distribuées sur la longueur des tubes guides (14), les barres de combustible (6) étant supportées par les grilles d'entretoise (16), dans lequel la buse inférieure (10) est une buse inférieure pour assemblage de combustible nucléaire selon l'une quelconque des revendications précédentes.
